# FASCICULE DE BREVET EUROPEEN

(11) **EP 0 589 754 B1**
(45) Date de publication et mention de la délivrance du brevet: **12.08.1998**
(21) Numéro de dépôt: 93402236.9
(22) Date de dépôt: 14.09.1993
(51) Int. Cl.: G06F 3/00, G06F 3/033

(54) **Dispositif de gestion d'un système d'interaction homme-machine**
Betriebsvorrichtung eines Mensch-Maschine Interaktionsystems
Method for managing a man-machine interaction system

(30) Priorité: 25.09.1992 FR 9211450
(43) Date de publication de la demande: 30.03.1994
(73) Titulaire: SEXTANT AVIONIQUE, 92360 Meudon-la-Forêt (FR)
(72) Inventeur: Favot, Jean-Jacques, F-92402 Courbevoie Cedex (FR); Perbet, Jean-Noel, F-92402 Courbevoie Cedex (FR); Barbier, Bruno, F-92402 Courbevoie Cedex (FR); Lach, Patrick, F-92402 Courbevoie Cedex (FR)
(74) Mandataire: Benoit, Monique

(56) Documents cités:
- EP-A- 0 405 732
- SYSTEMS AND COMPUTERS IN JAPAN vol. 23, no. 3 , 1992 , NEW YORK, US pages 38 - 48 T. TAKAHASHI ET F. KISHINO 'Gesture Recognition Method and Its Application'
- PROCEEDINGS OF THE TWELFTH ANNUAL INTERNATIONAL CONFERENCE OF THE IEEE ENGINEERING IN MEDICINE AND BIOLOGY SOCIETY vol. 12, no. 5 , 1990 , PHILADELPHIA, PENNSYLVANIA, US pages 2296 - 2297 G.E. HAMANN ET AL. 'Nod at your computer: switchless selection techniques using a headpointing device'
- IEICE TRANSACTIONS vol. J70-D, no. 11 , Novembre 1987 , JAPAN pages 2017 - 2025 R.A. BOLT 'The Integrated Multi-Modal Interface'

## Description

La présente invention concerne un dispositif de gestion d'un système d'interaction homme-machine. Elle s'applique notamment à des systèmes d'interaction homme-machine disposant de plusieurs moyens de communication de l'homme vers la machine tels que la reconnaissance vocale, la reconnaissance gestuelle et la désignation du regard par exemple et d'au moins un moyen de communication de la machine vers l'homme tel qu'un écran de visualisation ou une synthèse vocale ou sonore par exemple. Plus généralement, elle s'applique à tous systèmes d'interaction ayant à traiter un grand nombre de données.

Une plus grande efficacité et une meilleure ergonomie des systèmes d'interaction homme-machine s'obtiennent notamment par l'utilisation de plusieurs moyens d'interactions, ces systèmes étant en conséquence appelés des systèmes d'interaction multimédia. Ils présentent notamment, en cohérence, des données sur un ou plusieurs supports communs. Ces derniers sont connus de l'homme du métier. Les actions gestuelles ou vocales décrites par un opérateur sont reconnus par ces moyens qui constituent en quelque sorte des interfaces homme-machine. Ils communiquent à un système, généralement centralisé, les informations reconnues. Celles-ci peuvent être par exemple des informations de désignation, de validation ou de commande. La multiplicité des moyens de communication, notamment de l'homme vers la machine, permet différents modes de dialogues pour réaliser une action donnée. Il en résulte alors un nombre important d'évènements et de formes de dialogues à gérer. Dans de tels systèmes de dialogue entre un opérateur et une machine, constituée en fait d'un système de traitement et de moyens d'interaction, une grande quantité de données de natures diverses doit être emmagasinée, puis traitée et délivrée, engageant éventuellement des actions. Ces données peuvent être issues de paroles, de gestes ou de positions notamment, de même qu'elles peuvent être délivrées sous forme de paroles synthétisées, de signaux sonores ou d'objets ou caractères visualisés par un écran. Elles permettent d'interpréter le désir de l'opérateur et de satisfaire ses demandes par des actions sur le système avec lequel il interagit.

Le document "Gesture Recognition Method and Its Application" par T. Takahashi et F. Kishino, SYSTEMS AND COMPUTERS IN JAPAN, vol 23, no. 3, 1992, NEW YORK, US, pages 38-48 divulgue un tel système d'interaction homme - machine mêlant reconnaissance de parole et de gestes.

Généralement, tous les types d'informations et de données précitées sont prises en compte par un même niveau de traitement. Cela a pour effet, d'une part, d'entraîner un longs temps de stockage des données avant leur traitement et, d'autre part, un temps trop long de ce même traitement, eu égard aux performances de rapidité d'exécution attendues ou nécessaires de ces systèmes. Ces mauvaises performances en temps réel freinent leur expansion en les limitant notamment à des applications peu exigeantes en rapidité d'exécution et en temps réel.

De plus, ce manque de rapidité affecte l'ergonomie de ces systèmes multimédia en imposant à l'opérateur des attitudes d'interaction peu naturelles dû au fait notamment qu'ils ne parviennent pas à suivre et à traiter en temps réel des attitudes plus naturelles où intervient par exemple une relative rapidité des gestes et un mélange de ceux-ci avec la parole ou le regard.

On connait d'autre part de EP-A-0 405 732 un dispositif de traitement de données pour controller un équipement en opérant sur des moyens de contrôle dudit équipement, en réponse à des signaux issus de capteurs, dans lequel les signaux des capteurs sont traitées en trois étapes selon une architecture comportant troix niveaux de processeurs recevant chacun les résultats du niveau précédent.

Le but de l'invention est de pallier les inconvénients précités en utilisant notamment des architectures fonctionnelles et matérielles permettant une gestion en temps réel et une utilisation plus ergonomique du système d'interaction multimédia.

A cet effet, l'invention a pour objet un dispositif de gestion d'un système d'interaction entre un homme et une machine traitant une suite de données entrantes fournies par des moyens d'interaction de l'homme vers la machine, caractérisé en ce qu'il comprend des moyens de calcul mettant en oeuvre au moins deux fonctions opérant simultanément sur des données de la suite, les données entrantes dans le système étant traitées par une première fonction, le résultat d'une fonction constituant les données d'entrée d'une fonction suivante, le résultat d'une dernière fonction étant fourni à la machine et à des moyens d'interaction vers l'homme, les fonctions étant synchronisées entre elles par un protocole d'échanges.

L'invention a pour principaux avantages qu'elle permet de diminuer les temps de traitement des données et informations prises en compte par le système, qu'elle accroît ses fonctionnalités et ses capacités en temps réel, qu'elle permet facilement sa supervision par un système expert, qu'elle permet une implantation du logiciel d'application sur un seul ou sur plusieurs calculateurs, qu'elle permet l'imbrication de différentes actions, et enfin qu'elle est économique et aisée à mettre en oeuvre.

D'autres caractéristiques et avantages de l'invention apparaîtront à l'aide de la description qui suit, faite en regard des dessins annexés qui représentent :
- la figure 1, un synoptique du procédé de gestion d'un système d'interaction homme-machine selon l'invention ;
- la figure 2, un exemple de positions temporelles de fonctions possibles constitutives du procédé selon l'invention ;
- la figure 3, un mode de réalisation possible d'un dispositif du procédé selon l'invention ;
- la figure 4, une illustration du déroulement simultané de fonctions possibles constitutives du procédé selon l'invention et des exemples de protocoles d'échanges entre elles.

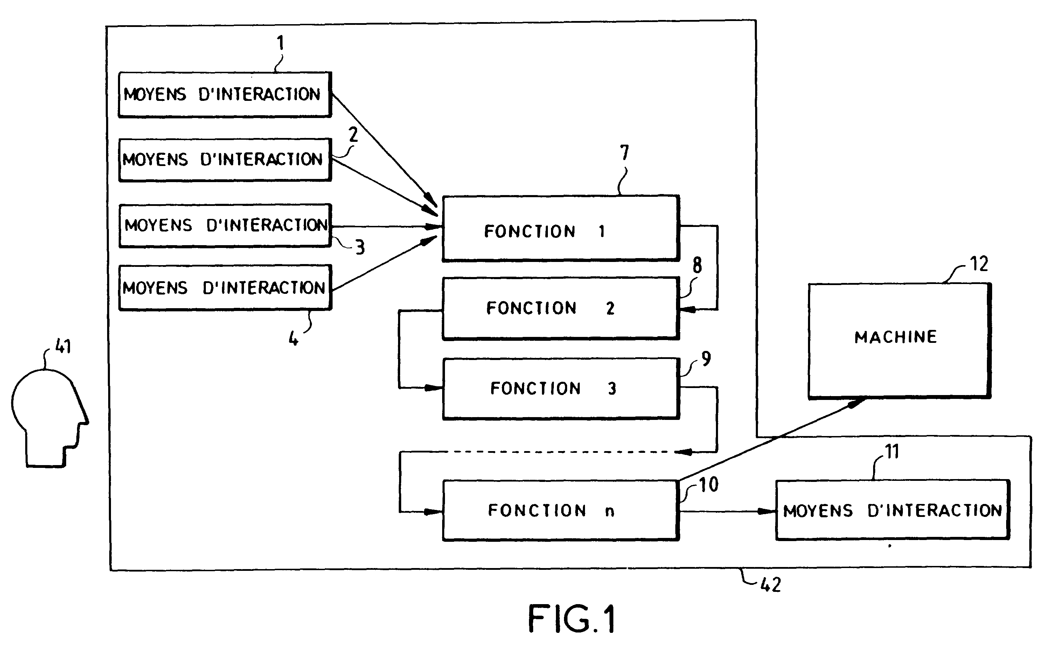

La figure 1 présente un synoptique du dispositif de gestion d'un système d'interaction 42 homme-machine selon l'invention. Un principe de l'invention est notamment de décomposer la gestion de l'interface homme-machine en plusieurs fonctions, indépendantes par exemple, opérant simultanément. Ces fonctions peuvent par exemple être implantées sur des machines différentes. Chaque fonction, indépendamment des autres fonctions par exemple, effectue un traitement particulier sur ses données entrantes. Elle communique à la fonction suivante le résultat de son traitement. Elle peut notamment se synchroniser avec les autres fonctions par un protocole d'échange, du type question-réponse, poignée de main par exemple. Les données en entrée d'une première fonction 7 sont fournies par des moyens d'interactions 1, 2, 3, 4, ceux-ci pourraient par exemple n'être que d'un seul type. Ces moyens d'interactions peuvent faire appel par exemple à la parole, au geste, au regard ou à la position de la main d'un opérateur 41 en interaction avec une machine 12. Ces moyens d'interaction peuvent être par exemple constitués à partir de systèmes de reconnaissance vocale, de gants numériques ou d'oculomètres connus de l'homme du métier. Les données sont traitées par la première fonction 7 réalisant par exemple un pré-traitement du type normalisation. Les données de sortie de cette première fonction 7, constituant le résultat de son traitement, sont prises en compte comme données d'entrée d'une deuxième fonction 8 qui les traite. De même, les données de sortie de cette deuxième fonction 8 sont prises en compte comme données d'entrée d'une troisième fonction 9. Les données sont ainsi traitées successivement par une suite de fonctions jusqu'à une n^{ième} et dernière fonction 10 qui traite les données de sortie de l'avant-dernière fonction et délivre des données commandant la machine 12 avec laquelle l'opérateur 41 interagit et des moyens d'interaction 11 de la machine 12 vers l'opérateur 41. Ces moyens d'interaction 11 peuvent être par exemple un écran de visualisation ou un système de synthèse vocale. L'écran visualise notamment des objets graphiques représentant les parties de la machine sur lesquelles l'opérateur agit. Les différentes fonctions 7, 8, 9, 10 opèrent simultanément. Les traitements qu'elles effectuent peuvent être indépendants les uns des autres. Pour obtenir un bon déroulement du processus de gestion, il est souhaitable que les démarrages de ces fonctions soient synchronisés. Les moyens de synchronisations peuvent être du type question-réponse ou poignée de main par exemple, ou tout autre moyen connu de l'homme du métier.

La première fonction 7 peut par exemple réaliser un pré-traitement des données en intégrant par exemple une opération de normalisation, une opération de fusion et une opération d'élaboration d'un message. A cet effet, l'opération de normalisation consiste à effectuer, sur des données issues de moyens d'interactions différents par exemple, les changements de repères et d'unités adéquats pour qu'elles aient les mêmes dimensions et puissent ainsi être traitées de la même manière ou fusionnées entre elles. L'opération de fusion consiste à combiner, par le calcul, deux ou plusieurs données de base, pour synthétiser de l'information de plus haut niveau. Ainsi, sans être perdue, toutes informations de base ne servant pas en tant que telles dans la ou les fonctions suivantes sont éliminées. Enfin, l'élaboration d'un message a pour but de rassembler dans un message de format unique toutes les données servant aux fonctions suivantes. Son rôle est aussi par exemple de transcoder toutes les données redondantes de manière à rendre le message compact et donc plus rapide à transmettre.

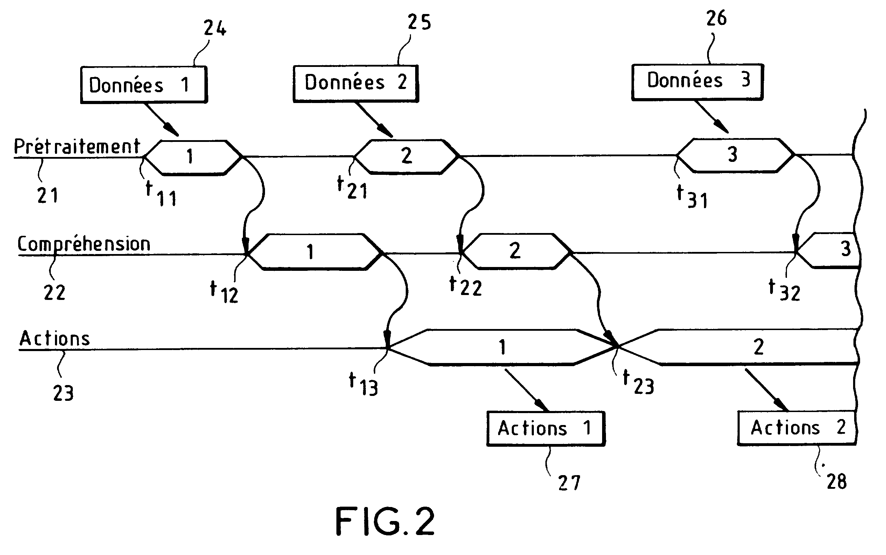

Un mode de réalisation du dispositif selon l'invention, peut comprendre par exemple trois fonctions de gestion opérant simultanément dans le temps conformément au synoptique de la figure 2 : une première fonction de pré-traitement telle que celle décrite précédemment, une deuxième fonction de compréhension du message délivré par la première fonction, et une troisième fonction d'action sur la machine 12 et sur le système interactif 20, par exemple sur un écran de visualisation ou un synthétiseur vocal.

Les données sont ainsi traitées successivement par une première fonction de pré-traitement, une deuxième fonction de compréhension et une troisième fonction d'action sur la machine, un système avion par exemple. Ces fonctions opérent simultanément et sont synchronisées entre elles.

La deuxième fonction, fonction de compréhension interprète le message délivré par la première fonction, fonction de pré-traitement, pour en extraire notamment le désir de l'opérateur en interaction avec le système. Cette fonction améliore notamment l'ergonomie du système d'interaction en permettant à l'opérateur de communiquer avec la machine avec des gestes plus naturels. Cette fonction peut vérifier de plus si le désir de l'opérateur est correctement exprimé par les moyens d'interaction, s'il a un sens pour le dialogue en cours entre l'opérateur et la machine et s'il peut être réalisé en fonction de l'état de la machine. Ces vérifications apportent une sûreté de fonctionnement.

La troisième fonction, fonction d'action sur la machine et sur les moyens d'interaction de la machine vers l'opérateur, a pour but notamment de modifier celui-ci, objet de l'interaction, en fonction des demandes de l'utilisateur exprimées via les moyens d'interaction, la première fonction de pré-traitement et la deuxième fonction de compréhension. Les actions de modification d'un système interactif sont généralement de grosses consommatrices de temps. Pour diminuer celui-ci, les éléments de la troisième fonction d'action peuvent par exemple être organisées de manière à pouvoir traiter plusieurs actions simultanément, notamment des actions sur la machine et des retours d'information vers l'opérateur.

La figure 2 présente les positions temporelles des fonctions dans le cas d'applications précitées. Des lignes 21, 22, 23 illustrent respectivement la position temporelle de la fonction de pré-traitement, de compréhension et d'actions. Un premier flot de données 24 faisant partie d'une suite de données 24, 25, 26 entrant dans le système d'interaction, est d'abord pris en compte par la fonction de traitement à un instant t₁₁ pour être traitée jusqu'à un instant t₁₂, instant où les données de sortie ou résultat de cette première fonction de traitement sont pris en compte par la deuxième fonction de compréhension et traitées jusqu'à un instant t₁₃, instant où les données de sortie ou résultat de cette fonction sont pris en compte par la fonction d'actions jusqu'à un temps t₂₃. Le résultat de cette troisième fonction d'actions génère une première action ou une première série d'actions 27. Parallèlement, à un instant t₂₁ supérieur à t₁₂ et inférieur à t₁₃ par exemple, un deuxième flot de données 25 de la suite 24, 25, 26 est pris en compte par la première fonction de pré-traitement jusqu'à un temps t₂₂ où le résultat de cette fonction est pris en compte par la deuxième fonction de compréhension jusqu'à un temps inférieur à t₂₃ par exemple. Le résultat de cette fonction peut alors être stocké par exemple dans des mémoires tampon. A l'instant t₂₃, par exemple, ce résultat est pris en compte sur la troisième fonction d'actions dont le résultat génère une deuxième action ou une deuxième série d'actions 28. Généralement, la durée de traitement de la troisième fonction d'action peut être plus longue que celle des autres fonctions. Dans ce cas, comme cela est illustré sur la figure 2, les traitements des données par la troisième fonction d'action peuvent être successifs et sensiblement sans interruption entre chaque traitement. Les lancements des deux autres fonctions sont alors synchronisées, d'une part entre elles et, d'autre part, par rapport à cette troisième fonction. La figure 2 illustre un troisième flot de données 26 faisant partie de la suite et étant pris en compte par la première fonction de traitement à partir d'un temps t₃₁ supérieur à t₂₃ par exemple, jusqu'à un temps t₃₂. A ce dernier instant, le résultat fourni par la première fonction est par exemple pris en compte par la deuxième fonction de compréhension.

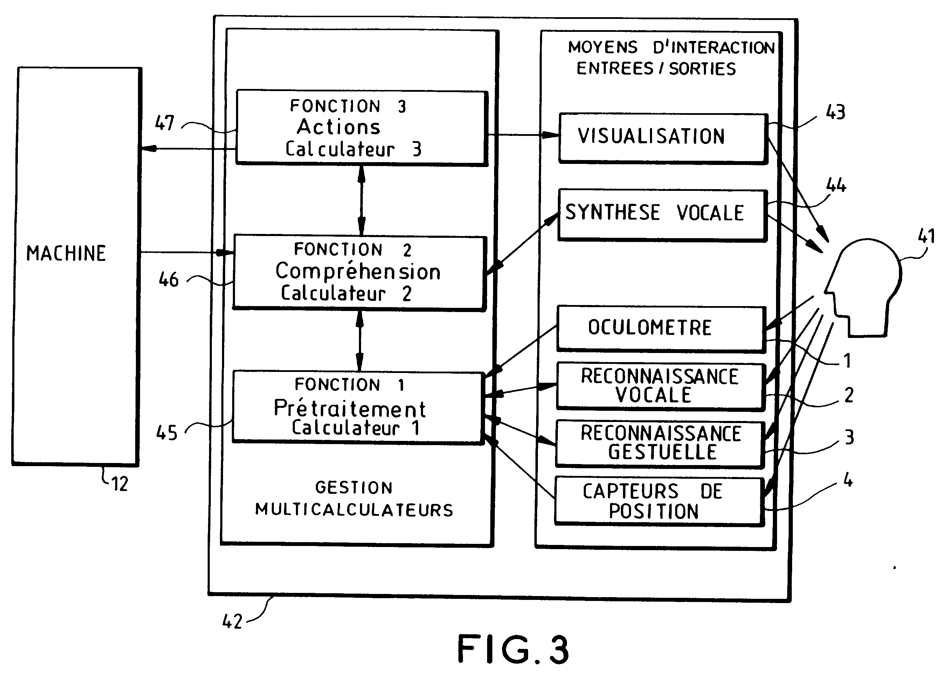

La figure 3 présente un mode de réalisation possible d'un dispositif d'application du procédé selon l'invention gérant le dialogue entre l'homme et une machine. Cette gestion est réalisée au sein d'un système d'interaction multimédia comportant notamment comme moyen d'interaction un écran de visualisation, de grande dimension par exemple. Ce système de dialogue homme-machine multimédia est notamment basé sur l'utilisation d'une grande image et de moyens d'interaction privilégiant des canaux sensoriels et moteurs humains comme la parole, le geste, l'ouïe et la vue par exemple. Son but est notamment de permettre la gestion de systèmes complexes, par exemple un système de pilotage ou de copilotage d'un avion, en assurant un dialogue optimal entre l'homme et la machine.

Sur la figure 3 un homme 41 dialogue, est en interaction avec une machine 12, via un système d'interaction 42. Des moyens d'interaction 1, 2, 3, 4, 43, 44 permettent ce dialogue. Ce sont d'une part des moyens interaction d'entrée ou de l'homme 41 vers le système d'interaction comprenant notamment des moyens de calculs 45, 46, 47 destinés à mettre en oeuvre des fonctions de gestion du type de celles précitées. Ces moyens d'interaction comprennent par exemple un oculomètre 1, un système de reconnaissance vocale 2, un système de reconnaissance gestuelle 3, notamment de reconnaissance des gestes de la main et des capteurs de position 4, notamment de la main. Tous ces moyens d'interaction sont autonomes et fournissent cycliquement de manière asynchrone des données sur l'activité de l'homme 41 jouant le rôle d'un opérateur. Les moyens d'interaction d'entrée pourraient aussi comporter un manche, un clavier ou une souris.

L'oculomètre 1 mesure la direction du regard par rapport à la tête de l'opérateur à l'aide d'une caméra de très petites dimensions analysant le reflet cornéen d'une diode infra-rouge éclairant par exemple l'oeil droit. Le système de reconnaissance vocale 2 peut être un système de reconnaissance de la parole en continu déclenché par détection de paroles, effectuant par exemple une analyse phonétique du signal reçu après l'avoir ordonné en messages et en mots.

Le système de reconnaissance gestuelle 3 peut être un dispositif à fibres optiques équipant un gant numérique porté par une main. Ce dispositif, connu de l'homme du métier, permet de mesurer l'angle de flexion des deux premières articulations de chaque doigt de la main. Un dispositif associé peut permettre par exemple de reconnaître une posture, notamment la forme de la main, parmi un ensemble de postures préalablement enregistrées. Les capteurs de position 4 peuvent être par exemple des capteurs électromagnétiques couplés à des émetteurs fixes donnant les positions et les orientations de la main et de la tête de l'homme 41.

D'autre part, les moyens d'interaction comprennent des moyens d'interaction de sortie ou du système vers l'homme 41. Ce sont par exemple des moyens de visualisation 43 et des moyens de synthèse vocale 44. Les moyens de visualisation 43 peuvent être par exemple un rétroprojecteur fournissant des images en couleur sur un écran de visualisation. Les moyens de synthèse vocale 44 peuvent être constitués d'un synthétiseur vocal connu de l'homme du métier associé à un dispositif sonore, d'alerte par exemple.

La gestion du dialogue homme-machine est par exemple élaborée par trois fonctions indépendantes, opérant simultanément et du type de celles précitées, à savoir une première fonction de prétaitement, une deuxième fonction de compréhension et une troisième fonction d'actions. Ces fonctions peuvent être implantées par exemple sur des calculateurs distincts pour être notamment exécutées simultanément. Dans ce cas, la première fonction de prétraitement est implantée sur un premier calculateur 45, la deuxième fonction de compréhension est implantée sur un deuxième calculateur 46 et la troisième fonction d'actions est implantée sur un troisième calculateur 47.

Les calculateurs 45, 46, 47 peuvent être connectés entre eux par des liaisons de type série à haut débit, égal à 19200 bauds par exemple, le protocole d'échange entre ces calculateurs pouvant être du type question-réponse ou poignée de main par exemple.

Le premier calculateur 45 exécutant la première fonction de prétraitement communique notamment avec les moyens d'interaction d'entrée 1, 2, 3, 4 pour récupérer les données sur l'activité de l'homme 41, c'est-à-dire de l'opérateur. Puis il transforme et fusionne ces données de manière à former un message qu'il transmet au deuxième calculateur 46, ce message peut être par exemple fourni à la demande du deuxième calculateur 46 sur lequel est implantée la fonction de compréhension. Cette demande de la part du deuxième calculateur 46 peut aussi conditionner la formation d'un message par le premier calculateur 45, celui-ci, ayant récupéré les données fournies par un des moyens d'interaction d'entrée, ne formant le message qu'en cas de demande du deuxième calculateur 46. Le deuxième calculateur 46 peut recevoir par exemple des informations venant de la machine 12. Le cycle de traitement autonome réalisé par le premier calculateur 45 peut être d'environ 30 ms par exemple. Il communique avec les moyens d'interaction d'entrée 1, 2, 3, 4 par l'intermédiaire de liaisons série à haut débit, égal à 19200 bauds par exemple, en utilisant divers protocoles de synchronisation. Ces protocoles de synchronisation peuvent être par exemple une interruption pour la reconnaissance vocale, une question-réponse pour la reconnaissance gestuelle et les détections de position et un octet de synchronisation pour la détection de la direction du regard par l'oculomètre 1. Le premier calculateur 45 peut, par exemple, fournir des messages contenant les informations suivantes : un octet de synchronisation, un numéro indiquant une posture mémorisée, un angle de flexion de l'index de l'opérateur 41, un angle de rotation de sa main autour de l'axe du bras, une distance de sa main à l'écran de visualisation 43, les coordonnées d'un point de l'écran de visualisation désigné par sa main, les coordonnées d'un point de l'écran de visualisation désigné par son oeil et sa tête, un mot d'état décrivant les moyens d'interaction, la longueur du message vocal et les différents mots du message vocal, chacune de ces informations pouvant être contenues par exemple sur un ou deux octets.

Le deuxième calculateur 46, exécutant la deuxième fonction de compréhension, interprète notamment le contenu du message fourni par le premier calculateur, ce message contenant des informations délivrées par un ou plusieurs moyens d'interaction. Il évalue la demande de l'opérateur 41 et en déduit les actions à entreprendre par exemple. Il est par exemple entièrement autonome. Il communique avec le premier calculateur 45 par un protocole du type question-réponse et avec le troisième calculateur 47 par un protocole du type poignée de main par exemple. Le deuxième calculateur 46 peut par ailleurs interpréter le contenu de messages provenant de la machine 12

Le troisième calculateur 47, exécutant la troisième fonction d'actions, est dédié principalement aux actions sur la machine 12 à la génération des images présentées sur l'écran de visualisation 43. Il est donc relié, par une liaison série par exemple, à ces moyens de visualisation 43. Cependant, il est aussi relié aux moyens de synthèse vocale 44, ceux-ci constituant des moyens d'interaction de sortie vers l'opérateur 41 et permettant donc l'élaboration de messages sonores qui peuvent être l'objet d'actions générées par le troisième calculateur 47. Ce dernier reçoit des messages codés de la part du deuxième calculateur 46 indiquant notamment des actions à exécuter, les informations qu'ils contiennent peuvent donc être les suivantes par exemple : un octet de synchronisation, un code d'une action à exécuter, un code de l'objet sur lequel l'action va porter et divers paramètres définissant notamment l'action. Chacune de ces informations peut par par exemple être contenue sur un octet.

Les actions que le troisième calculateur 47 permet d'exécuter sont principalement orientées vers la modification de paramètres de la machine 12, ces paramètres étant par exemple représentés par des objets graphiques visualisés sur l'écran de visualisation 43 ou par l'élaboration de messages sonores associés. Les exemples d'actions sur la machine 12 peuvent être représentés sur l'écran de visualisation, notamment par ouverture d'une fenêtre, la fermeture d'une fenêtre, le déplacement d'une fenêtre, le changement de taille d'une fenêtre, le réglage d'un potentiomètre virtuel ou le positionnement d'un bouton virtuel.

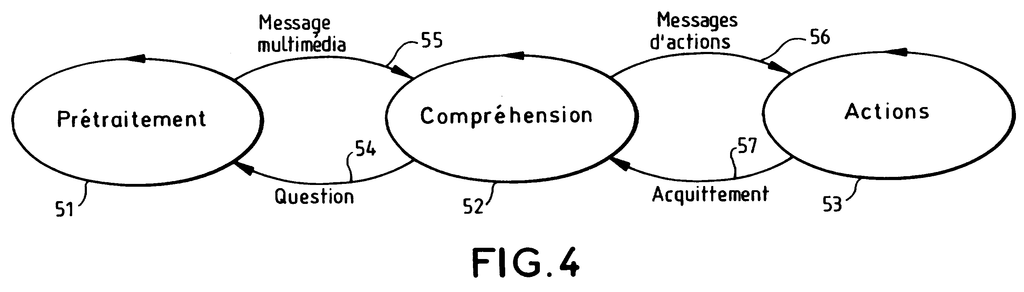

La figure 4 illustre les déroulements simultanés des fonctions implantées sur les trois calculateurs 45, 46, 47 de l'exemple d'application précité du procédé selon l'invention. Elle illustre aussi des modes possibles d'échanges entre ces calculateurs. Trois boucles fermées et fléchées 51, 52, 53 illustrent respectivement le déroulement autonome de la première fonction de prétraitement sur le premier calculateur 45, de la deuxième fonction de compréhension sur le deuxième calculateur 46 et de la troisième fonction de compréhension sur le troisième calculateur 47. Le protocole d'échanges entre le premier et le deuxième calculateur étant par exemple du type question-réponse, celui-ci envoie une question 54 au premier qui délivre un message multimédia 55. Ce message est qualifié de multimédia car il comporte en général des informations fournies par plusieurs moyens d'interaction. Le protocole d'échanges entre le deuxième et le troisième calculateur étant par exemple du type poignée de main, le deuxième calculateur transmet au troisième calculateur un message d'actions 56 contenant des actions à générer par ce dernier qui transmet au deuxième calculateur un acquittement 57 pour confirmer la prise en compte des actions à ce dernier.

Les protocoles d'échanges précités font que les déroulements des fonctions implantées sur les différents calculateurs ne sont pas entièrement indépendants les uns des autres. Cependant, mis à part les contraintes d'échanges, ces fonctions peuvent se dérouler de façon autonome et indépendante.

Dans l'exemple d'application précité, les messages d'actions arrivant du deuxième calculateur 46 dédié à la fonction de compréhension peuvent par exemple s'accumuler à l'intérieur d'une mémoire dans une pile du type "premier entrée, premier sorti" ou FIFO suivant la terminologie anglo-saxonne. Le troisième calculateur 47 peut par exemple traiter plusieurs actions simultanément. Les différentes ressources du calculateur affectées à ces actions vont alors chercher dans la pile les actions à exécuter et, dès la prise en compte d'une action, renvoient vers le deuxième calculateur 46 un acquittement.

Le procédé de gestion selon l'invention est particulièrement avantageux pour des systèmes comportant plusieurs moyens d'interaction, néanmoins son principe, indépendant du nombre de moyens d'interaction mais notamment avantageux pour un grand nombre de données d'entrées à traiter, peut s'appliquer à un système comportant un seul moyen d'interaction d'entrée, de l'homme vers le système.

## Revendications

1. Dispositif de gestion d'un système d'interaction (42) entre un homme (41) et une machine (12) traitant une suite de données (24, 25, 26) entrantes fournies par des moyens d'interaction (1, 2, 3, 4) de l'homme vers la machine, caractérisé en ce qu'il comprend des moyens de calcul (45, 46, 47) mettant en oeuvre au moins deux fonctions indépendantes (7, 8, 9, 10) opérant simultanément sur des données (24, 25, 26) de la suite, les données entrantes dans le système (42) étant traitées par une première fonction (7), le résultat d'une fonction constituant les données d'entrée d'une fonction suivante, le résultat d'une dernière fonction (10) étant fourni à la machine (12) et à des moyens d'interaction (11) vers l'homme (41), les fonctions étant synchronisées entre elles par un protocole d'échanges.

2. Dispositif selon la revendication 1, caractérisé en ce qu'il met en oeuvre trois fonctions, une première fonction de prétraitement des données fournies par les moyens d'interaction, cette première fonction élaborant des messages, une deuxième fonction de compréhension des messages, une troisième fonction de génération d'actions.

3. Dispositif selon la revendication 1, caractérisé en ce que le protocole d'échanges est du type question-réponse, du type poignée de main ou comprenant un octet de synchronisation.

4. Dispositif selon l'une quelconque des revendications précédentes, caractérisé en ce qu'il comprend des moyens de calculs autonomes (45, 46, 47), chaque fonction (7, 8, 9, 10) étant implantée sur un moyen de calcul différent.

5. Dispositif selon la revendication 4, caractérisé en ce qu'il comprend des moyens d'interaction de visualisation (43) permettant de visualiser des objets graphiques sur un écran, les objets représentant des paramètres de la machine (12).

6. Dispositif selon l'une quelconque des revendications 4 ou 5, caractérisé en ce qu'il comprend un oculomètre (1) mesurant la direction du regard par rapport à l'homme (41), des moyens de reconnaissance vocale (2), des moyens de reconnaissance gestuelle (3) et des capteurs de position (4).

7. Dispositif selon la revendication 6, caractérisé en ce que les moyens de reconnaissance gestuelle (3) et les capteurs de position (4) sont appliqués à une main de l'homme (41).

8. Dispositif selon la revendication 2 et l'une quelconque des revendications 4 à 7, caractérisé en ce que la fonction de prétraitement est implantée sur un premier calculateur (45), la fonction de compréhension est implantée sur un deuxième calculateur (46) et la fonction de génération d'actions est implantée sur un troisième calculateur (47).

9. Dispositif selon les revendications 5 et 8, caractérisé en ce que le troisième calculateur (47) transmet ses résultats aux moyens d'interaction de visualisation (43), les actions générées étant la manipulation d'objets graphiques sur l'écran.

## Patentansprüche

1. Vorrichtung zur Verwaltung eines Interaktionssystems (42) zwischen einem Menschen (41) und einer Maschine (12), das eine Folge von hereinkommenden Daten (24, 25, 26) verarbeitet, die von Mitteln (1, 2, 3, 4) zur Interaktion vom Menschen zu der Maschine geliefert werden, dadurch gekennzeichnet, daß es Rechenmittel (45, 46, 47) aufweist, die wenigstens zwei unabhängige Funktionen (7, 8, 9, 10) verwenden, die gleichzeitig an den Daten (24, 25, 26) der Folge arbeiten, wobei die in das System (42) hereinkommenden Daten durch eine erste Funktion (7) verarbeitet werden, wobei das Ergebnis einer Funktion die Eingangsdaten einer folgenden Funktion bildet, wobei das Ergebnis einer letzten Funktion (10) an die Maschine (12) und an Mittel (11) zur Interaktion mit dem Menschen geliefert wird, wobei diese Funktionen durch ein Austauschprotokoll untereinander synchronisiert sind.

2. Vorrichtung nach Anspruch 1, dadurch gekennzeichnet, daß es drei Funktionen verwendet, eine erste Funktion zur Vorverarbeitung der von den Interaktionsmitteln gelieferten Daten, wobei diese erste Funktion Nachrichten erarbeitet, eine zweite Funktion zum Verstehen der Nachrichten und eine dritte Funktion zur Erzeugung von Aktionen.

3. Vorrichtung nach Anspruch 1, dadurch gekennzeichnet, daß das Austauschprotokoll vom Typ Frage-Antwort oder vom Typ Handgriff ist oder ein Synchronisationsbyte aufweist.

4. Vorrichtung nach einem der vorhergehenden Ansprüche, dadurch gekennzeichnet, daß sie autonome Rechenmittel (45, 46, 47) aufweist, wobei jede Funktion (7, 8, 9, 10) in einem anderen Rechenmittel eingebaut ist.

5. Vorrichtung nach Anspruch 4, dadurch gekennzeichnet, daß sie Visualisierungsinteraktionsmittel (43) aufweist, die die Visualisierung der graphischen Objekte auf einem Bildschirm ermöglichen, wobei die Objekte Parameter der Maschine (12) darstellen.

6. Vorrichtung nach einem der Ansprüche 4 oder 5, dadurch gekennzeichnet, daß sie ein Okulometer (1), das die Richtung des Blicks bezüglich des Menschen (41) mißt, Mittel (2) zur Spracherkennung, Mittel (3) zu Gestenerkennung sowie Positionssensoren (4) aufweist.

7. Vorrichtung nach Anspruch 6, dadurch gekennzeichnet, daß die Mittel (3) zur Gestenerkennung und die Positionssensoren (4) an eine Hand des Menschen (41) angelegt sind.

8. Vorrichtung nach Anspruch 2 und einem der Ansprüche 4 bis 7, dadurch gekennzeichnet, daß die Vorverarbeitungsfunktion in einen ersten Rechner (45), die Verstehensfunktion in einen zweiten Rechner (46) und die Funktion der Erzeugung von Aktionen in einen dritten Rechner eingebaut ist.

9. Vorrichtung nach den Ansprüchen 5 und 8, dadurch gekennzeichnet, daß der dritte Rechner (47) seine Ergebnisse zu den Visualisierungsinteraktionsmitteln (43) überträgt, wobei die erzeugten Aktionen die Manipulation von graphischen Objekten auf dem Bildschirm sind.

## Claims

1. Device for the management of an interaction system (42) between a man (41) and a machine (12) processing a sequence of incoming data (24,25,26) output by means of interaction (1,2,3,4) from the man to the machine, characterized in that it comprises computation means (45,46,47) implementing at least two independent functions (7,8,9,10) operating simultaneously on data (24,25,26) in the sequence, data incoming into the system (42) being processed by a first function (7), the result of one function forming the input data for a next function, and the result of a final function (10) being output to the machine (12) and to means of interaction (11) to the man (41), the functions being synchronized with each other by an exchange protocol.

2. Device according to Claim 1, characterized in that it implements three functions, a first function for preprocessing of data output by the interaction means, this first function generating messages, a second message comprehension function and a third action generation function.

3. Device according to Claim 1, characterized in that the exchange protocol is of the question-answer type, or the handshake type, or of the type containing a synchronization byte.

4. Device according to any one of the preceding claims, characterized in that it includes independent computation means (45,46,47), each function (7,8,9,10) being located on a different computation means.

5. Device according to Claim 4, characterized in that it includes display interaction means (43) in order to display graphic objects on a screen, the objects representing parameters of the machine (12).

6. Device according to either one of Claims 4 or 5, characterized in that it includes an oculometer (1) measuring the direction of looking relative to the man (41), voice recognition means (2), gesture recognition means (3) and position sensors (4).

7. Device according to Claim 6, characterized in that the gesture recognition means (3) and position sensors (4) are fitted to one of the hands of the man (41).

8. Device according to Claim 2 and any one of Claims 4 to 7, characterized in that the preprocessing function is located on a first computer (45), the comprehension function is located on a second computer (46) and the action generation function is located on a third computer (47).

9. Device according to Claims 5 and 8, characterized in that the third computer (47) transmits its results to the display interaction means (43), the actions generated being the manipulation of graphic objects on the screen.
